(19) Europäisches Patentamt
European Patent Office
Office européen des brevets

(11) **EP 2 406 660 B1**

(12) **FASCICULE DE BREVET EUROPEEN**

(45) Date de publication et mention
de la délivrance du brevet:
**18.12.2013 Bulletin 2013/51**

(21) Numéro de dépôt: **10707020.3**

(22) Date de dépôt: **04.03.2010**

(51) Int Cl.:
***G01S 13/91*** *(2006.01)*     ***G01S 13/00*** *(2006.01)*

(86) Numéro de dépôt international:
**PCT/EP2010/052771**

(87) Numéro de publication internationale:
**WO 2010/102945 (16.09.2010 Gazette 2010/37)**

(54) **SYSTEME RADAR MULTISTATIQUE DE SURVEILLANCE AEROPORTUAIRE**

MULTISTATISCHES RADARSYSTEM ZUR FLUGHAFENÜBERWACHUNG

MULTISTATIC RADAR SYSTEM FOR AIRPORT MONITORING

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **09.03.2009 FR 0951473**

(43) Date de publication de la demande:
**18.01.2012 Bulletin 2012/03**

(73) Titulaire: **ONERA (Office National d'Etudes et de Recherches
Aérospatiales)
92320 Châtillon (FR)**

(72) Inventeur: **LESTURGIE, Marc
F-91120 Palaiseau (FR)**

(74) Mandataire: **Bloch, Gérard
Gevers France
41, Avenue de Friedland
75008 Paris (FR)**

(56) Documents cités:
**EP-A- 0 550 073      EP-A- 0 744 630
EP-A- 1 712 931      WO-A-2006/035199
US-A- 5 268 698**

• **FEIL P ET AL: "Foreign Objects Debris Detection (FOD) on Airport Runways Using a Broadband 78 GHz Sensor" MICROWAVE CONFERENCE, 2008. EUMC 2008. 38TH EUROPEAN, IEEE, PISCATAWAY, NJ, USA, 27 octobre 2008 (2008-10-27), pages 1608-1611, XP031407486 ISBN: 978-2-87487-006-4**

**EP 2 406 660 B1**

**Description**

La présente invention concerne un procédé pour surveiller des cibles, notamment des cibles au niveau du sol sur une piste, et un système radar multistatique pour mettre en oeuvre le procédé.

Plus particulièrement, elle a trait à un système radar multistatique pour surveiller notamment des cibles telles que des objets et des aéronefs sur une piste d'un aéroport. Le système radar est non coopératif avec les cibles qu'il surveille.

Un système radar de surveillance selon le brevet US 5 268 698 comprend de nombreux émetteurs disposés autour d'une zone aéroportuaire et quelques récepteurs au voisinage d'une tour de contrôle. Un aéronef ou tout autre véhicule en déplacement dans la zone aéroportuaire est localisé par comparaison des signaux reçus par les récepteurs avec une grille de la zone lorsqu'elle inoccupée et par triangulation.

Un autre système radar de surveillance est connu par le brevet EP 0 744 630. Il comprend des capteurs radar disposés le long d'une piste et générant des faisceaux se recouvrant sensiblement. Une unité centrale traite des données radar transmises par les capteurs radar et reçoit via un transpondeur des informations d'identification des aéronefs pour produire une carte de la piste où sont identifiées les positions d'objets fixes comme des bâtiments et des aéronefs qui atterrissent et décollent dans le voisinage de la piste. Une menace intrusive détectée dans la zone surveillée est signalée aux aéronefs par des interfaces de télémétrie et le transpondeur.

Le brevet EP 0 550 073 divulgue un système radar de surveillance d'aéronefs roulant dans une zone aéroportuaire comprenant au moins trois stations radar d'émission et réception disposés aux coins d'une zone aéroportuaire quadrilatérale et illuminant au moins un secteur de 90° en azimut. Par exemple, par mesures bistatiques de signaux reçus et sélection de fréquences différentes des signaux émis, aucune zone d'ombre, comme celle créée par un bâtiment, ne subsiste dans la zone surveillée.

Tous ces systèmes radar de surveillance ne localisent pas précisément un petit objet non identifié déposé sur une piste.

Par ailleurs, le document WO 2006/035199 divulgue un radar à onde continue modulée en fréquence (FMCW) qui peut être utilisé pour détecter sur des pistes d'aéroport des débris d'objet étranger (FOD). Pour améliorer la probabilité de détection de débris, le radar émet un signal polarisé circulairement vers la droite et reçoit en diversité un signal polarisé circulairement vers la gauche et un signal polarisé circulairement vers la droite.

L'invention vise à résoudre le problème précité pour améliorer la sécurité des déplacements d'aéronefs qui doivent atterrir et rouler sur une piste. Elle fournit un procédé et un système non coopératif de surveillance permettant de détecter des petits objets sur une piste, tout étant capable de surveiller une cible se déplaçant sur la piste, mais aussi des cibles aériennes dans les environs de la piste.

A cette fin, un procédé pour surveiller des cibles sur une piste au moyen de modules d'émission et de modules de réception, est caractérisé en ce que les modules d'émission et les modules de réception sont répartis alternativement le long de chacun des côtés longitudinaux de la piste, et en ce qu'il comprend une émission de signaux orthogonaux par les modules d'émission à raison d'au moins deux signaux orthogonaux par module d'émission, une réception cohérente avec l'émission de signaux reçus par les modules de réception, et une détection d'objet sur la piste basée sur une répartition des modules en des mailles comportant chacune trois couples de module d'émission et de module de réception voisins et sur une radiolocalisation de l'objet par triangulation et interférométrie dans au moins une maille.

Les modules d'émission et les modules de réception ont des antennes fixes omnidirectionnelles et a priori toutes les directions de l'espace sont surveillées par le système radar de l'invention ce qui lui permet de surveiller périodiquement, par exemple toutes les 0,1 s, aussi bien la piste et ses abords que les environs au dessus de la piste, comme on le verra ci-dessous. En conséquence, tout objet dangereux sur la piste, comme des débris d'aéronef, et tout mouvement suspect, comme un écart de trajectoire, sont détectés.

L'émission de signaux orthogonaux par les modules d'émission, comme des signaux d'émission ayant des fréquences monochromatiques différentes deux à deux et particulièrement relativement basses de l'ordre de la dizaine à la centaine de mégahertz, à raison d'au moins deux signaux orthogonaux par module d'émission, assure une bande utile du système étroite, de largeur de quelques dizaines à quelques centaines de kilohertz et donc inférieure à celles des systèmes radar connus, et une réflexion par l'environnement cohérente et lentement variable. La surveillance de la piste par un maillage des modules d'émission et des modules de réception séparés de plusieurs mètres et alternés le long de la piste autorise avantageusement une faible puissance des modules et un coût faible des modules. Par exemple dans une maille, chacun de trois modules d'émission est aligné avec un module de réception respectif parmi trois, sensiblement orthogonalement à l'axe longitudinal de la piste.

De manière à minimiser le couplage de trajet direct entre le module d'émission et le module de réception de chaque couple et ainsi à améliorer la détection en champ proche sur le piste, le procédé prévoit trois types de traitement des signaux reçus qui peuvent se cumuler.

Selon un premier traitement, le procédé comprend une émission de signaux par module d'émission pour partie à une première polarisation linéaire et pour partie à une deuxième polarisation linéaire orthogonale à la première polarisation, et la détection d'objet comprend périodiquement pour chaque couple bistatique de module d'émission et de module de réception dans une maille, une analyse polarimétrique des composantes selon les première et deuxième polarisations des signaux reçus par le module de réception du couple et issus des signaux orthogonaux aux première et deuxième polarisations linéaires émis par le module d'émission de la maille.

Selon un deuxième traitement, la détection d'objet comprend la détection d'objet comprend périodiquement pour chaque maille une soustraction cohérente d'un état de la piste libre pré-mémorisé à un état de la piste courant déduit du traitement des signaux reçus par les modules de réception de la maille.

Selon un troisième traitement, la détection d'objet comprend périodiquement pour chaque maille une détermination d'une matrice de covariance d'une matrice multistatique interférométrique des signaux reçus par les modules de réception dans la maille et une construction d'un filtre adapté dépendant de la matrice de covariance pour filtrer les signaux par les modules de réception de la maille.

Les signaux reçus par les modules de réception servent également à surveiller des cibles se déplaçant sur la piste. Le procédé de surveillance peut alors comprendre une analyse de cible se déplaçant sur la piste basée sur la répartition des modules en les mailles, sur une analyse périodique des signaux reçus par l'avant de chaque module de réception à travers la piste, et sur une mesure périodique de la variation de la section efficace radar de la cible se déplaçant sur la piste au voisinage des axes bistatique de trois couples dans une maille qui sont sensiblement concourants au centre de la maille.

Les signaux reçus par les modules d'émission servent aussi à surveiller des cibles aériennes dans les environs de la piste. Le procédé de surveillance peut alors comprendre une surveillance de trajectographie d'une cible aérienne dans les environs de la piste basée sur une localisation périodique de la cible aérienne par interférométrie multistatique des signaux reçus par les modules de réception dans un espace à trois dimensions correspondant aux coordonnées de position de la cible en ignorant l'effet Doppler, et par une combinaison d'un traitement d'une matrice multistatique des signaux reçus et de la diversité de l'effet Doppler.

L'invention a aussi pour objet un système pour surveiller des cibles sur une piste au moyen de modules d'émission et de modules de réception. Le système est caractérisé en ce que les modules d'émission et les modules de réception sont répartis alternativement le long de chacun des côtés longitudinaux de la piste, les modules d'émission étant propres à émettre des signaux orthogonaux à raison d'au moins deux signaux orthogonaux par module d'émission, et en ce que le système comprend un moyen pour une réception cohérente de signaux dans les modules de réception avec l'émission de signaux par les modules d'émission, et un moyen pour détecter un objet sur la piste basée sur une répartition des modules en des mailles comportant chacune trois couples de module d'émission et de module de réception voisins et sur une radiolocalisation de l'objet par triangulation et interférométrie dans au moins une maille.

Le système de surveillance peut comprendre également un moyen pour analyser une cible propre à se déplacer sur la piste basée sur des étapes de procédé énoncées précédemment, et un moyen pour la trajectographie d'une cible aérienne dans les environs de la piste basée sur des étapes de procédé énoncées précédemment.

Enfin, l'invention se rapporte à un programme d'ordinateur apte à être mis en oeuvre dans un système de surveillance selon l'invention, ledit programme comprenant des instructions qui, lorsque le programme est exécuté dans ledit système, commandent les étapes conformes au procédé de surveillance selon l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 est une vue dessus d'une piste entourée par des modules d'émission et des modules de réception d'un système radar multistatique de surveillance selon l'invention ;
- la figure 2 est un bloc-diagramme du système radar selon l'invention ;
- la figure 3 montre le spectre d'émission du système radar pour des groupes de porteuses respectivement associés à quelques modules d'émission ;
- la figure 4 montre des positions d'aéronefs et des étapes d'un mode de trajectographie de cible aérienne en approche de piste selon le procédé de surveillance de l'invention ;
- la figure 5 montre des positions d'aéronefs et des étapes d'un mode d'analyse de cible au roulage sur piste selon le procédé de surveillance de l'invention ;
- la figure 6 montre des positions d'aéronefs et d'un objet sur la piste et des étapes d'un mode de détection d'objet sur piste selon le procédé de surveillance de l'invention ;
- la figure 7 est un détail de la figure 1 montrant des couples bistatiques de module d'émission et de module réception dans une maille à trois modules d'émission et trois modules de réception du système radar multistatique ;
- la figure 8 est un graphe de variation des surfaces équivalentes radar reçues par des modules de réception de couples dans une maille au cours du roulage d'un aéronef sur la piste ; et
- la figure 9 est un détail de la figure 1 montrant une localisation d'un objet sur la piste dans une maille.

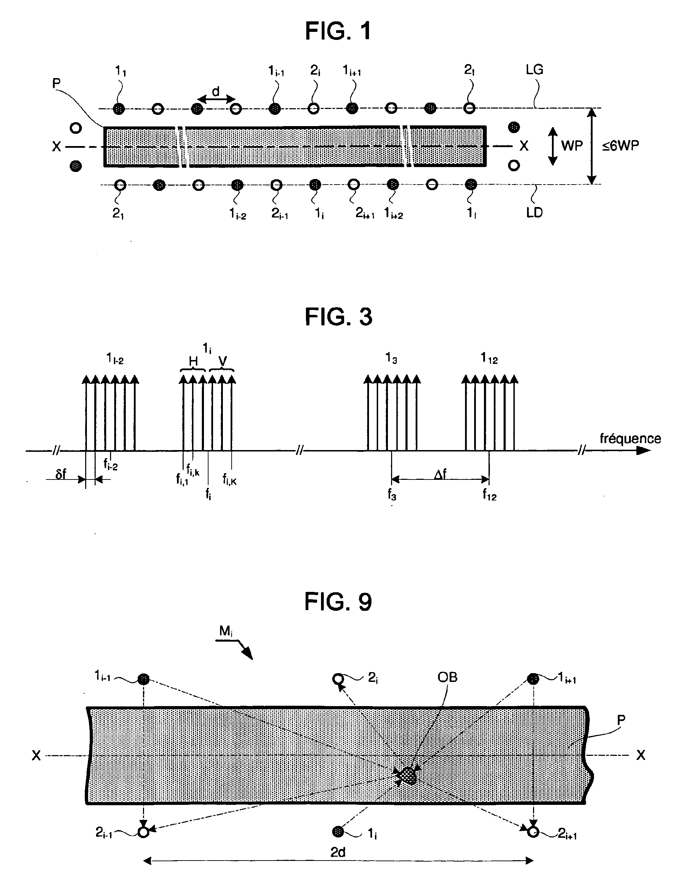

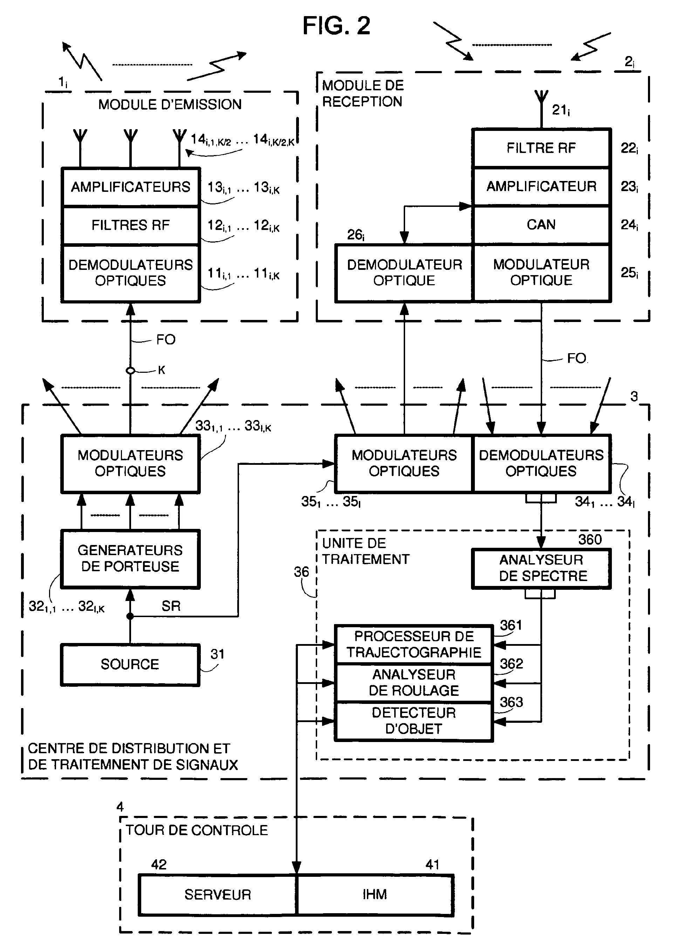

En référence à la figure 1, un système radar multistatique de surveillance comprend plusieurs modules d'émission $1_1$ à $1_I$ et plusieurs modules de réception $2_1$ à $2_I$ équirépartis le long des côtés longitudinaux d'une piste d'atterrissage et de décollage P d'un aéroport. Quelques modules d'émission et modules de réception peuvent être disposés aux extrémités de la piste. Le système radar comprend également un centre de distribution et de traitement de signaux 3 montré à la figure 2 dans laquelle seulement un module d'émission $1_i$ et un module de réception $2_i$ sont représentés sous la forme de blocs-diagrammes, avec $1 \leq i \leq I$.

Les modules peuvent être enterrés au moins partiellement et sont fixés dans le sol à une distance des bords longitudinaux de la piste P au plus égale à 3 WP environ pour une largeur WP de la piste. La distance 3 WP est déterminée pour réduire les risques de dommage causés par le roulement incidentel d'un aéronef sur les bords de la piste. Par exemple, pour une piste ayant une largeur de 45 m, les modules d'émission et les modules de réception jalonnent les bords de la piste alternativement sur chacune de deux lignes LG et LD parallèles à la piste P, à une distance d'au plus 75 m de l'axe longitudinal XX de la piste. Chaque module d'émission $1_i$ sur l'une des lignes parallèles LG et LD est aligné avec un module de réception respectif $2_i$ sur l'autre ligne parallèle suivant un axe bistatique orthogonal à l'axe XX. En fonction de contraintes aéroportuaires, les modules sont disposés sur deux surfaces rectangulaires dégagées d'obstacles OFZ longeant les côtés de longitudinaux de la piste et ayant une largeur de 37,5 m, ou sur deux bandes aménagées rectangulaires qui s'étendent entre 60 m et 75 m de l'axe XX. D'autres modules d'émission et de réception sont fixés dans des zones rectangulaires jouxtant les extrémités longitudinales de la piste et ayant une largeur comprise entre WP environ et 2 WP environ. Les modules d'émission $1_1$ à $1_I$ et les modules de réception $2_1$ à $2_I$ sont régulièrement répartis le long des côtés d'un rectangle encadrant la piste et ayant des axes communs avec celle-ci. Selon l'exemple de piste précédent, deux  modules voisins sur le rectangle encadrant la piste sont séparés d'une distance d d'environ 150 m. Par exemple, pour une piste longue de 4 km, le système radar comprend plus d'une cinquantaine de modules d'émission et de modules de réception.

Comme montré la figure 2, le centre de distribution et de traitement de signaux 3 comprend une source de signal d'émission 31, I x K générateurs de porteuse $32_{1,1}$ à $32_{I,K}$ et $I \times K$ modulateurs optiques $33_{1,1}$ à $33_{I,K}$ pour respectivement distribuer I groupes de K signaux à émettre respectivement par les modules d'émission $1_1$ à $1_I$, I démodulateurs optiques $34_1$ à $34_I$ et I modulateurs optiques $35_1$ à $35_I$ et une unité de traitement de signaux reçus 36 pour traiter les signaux reçus par les modules de réception $2_1$ à $2_I$. Selon la réalisation illustrée, le centre 3 est relié aux modules d'émission et de réception par des faisceaux de fibres optiques FO, à raison de K fibres optiques par module d'émission $1_i$ et de 1 à 2 fibres optiques par module de réception $2_i$. Le faisceau de fibres optiques contribue à la sécurisation des signaux échangés entre le centre 3 et les modules $1_1$ à $1_I$, et $2_1$ à $2_I$ de manière à ce qu'ils ne soient pas perturbés par des signaux brouilleurs.

La source 31 est une source de faible bruit du type comprenant un quartz ou une horloge atomique et fournissant un signal de référence commun SR appliqué aux générateurs de porteuse $32_{1,1}$ à $32_{I,K}$. Chaque groupe de K générateurs $32_{i,1}$ à $32_{i,K}$, comme par exemple des synthétiseurs de fréquence, produit K porteuses monochromatiques $f_{i,1}$ à $f_{i,K}$ destinées à un module d'émission respectif $1_i$, par exemple au nombre de K = 6. Les $I \times K$ porteuses ont des fréquences différentes entre elles et sont réparties comme montrées à la figure 3. Les fréquences $f_{i,1}$ à $f_{i,K}$ associées à un module d'émission $1_i$ sont espacées d'un intervalle $\delta f$ de l'ordre de 40 Hz à 100 Hz et occupent une bande de fréquence étroite centrée sur une fréquence propre $fi = (f_{i,1} + f_{i,K})/2$. Les bandes de fréquence et donc des fréquences propres $f_1$ à $f_I$ sont attribuées aléatoirement ou  arbitrairement aux modules d'émission. Les bandes de fréquence ne se recouvrent pas. La différence $\Delta f$ entre les fréquences centrales de deux groupes de porteuses successifs est supérieure à la fréquence Doppler maximale d'une cible, et est par exemple d'environ 200 Hz, 1 kHz ou 430 MHz pour une fréquence respective du signal de référence SR de 70 MHz, 4 kHz ou 960 MHz. Ceci confère une bande totale utile au système radar de l'ordre de quelques dizaines à quelques centaines de kilohertz. La bande totale utile du système radar est ainsi étroite conformément à l'un des objectifs de l'invention.

Chaque générateur de porteuse $32_{i,k}$ est relié à un modulateur optique respectif $33_{i,k}$ qui module par la porteuse respective $f_{i,k}$ à émettre une porteuse optique émise via une fibre optique respective FO vers un démodulateur optique $11_{i,k}$ dans le module d'émission respectif $2_i$, avec $1 \leq k \leq K$. En variante, les K modulateurs optiques respectifs $33_{i,1}$ à $33_{i,K}$ dans le centre 3, les K démodulateurs optiques $11_{i,1}$ à $11_{i,K}$ dans le module d'émission $2_i$ et les K fibres optiques entre ceux-ci sont remplacés par un système de transmission optique à multiplexage de K longueurs d'onde WDM ("Wavelength Division Multiplexing" en anglais) ayant une unique fibre optique.

Un module d'émission $1_i$ comprend en parallèle outre les K = 6 démodulateurs optiques $11_{i,1}$ à $11_{i,K}$, notamment K filtres passe-bande $12_{i,1}$ à $12_{i,K}$ et K amplificateurs $13_{i,1}$ à $13_{i,K}$ respectivement associés aux porteuses monochromatiques de fréquences $f_{i,1}$ à $f_{i,K}$ à émettre continuellement par le module d'émission. Les sorties des amplificateurs $13_{i,1}$, $13_{i,2}$ et $13_{i,3} = 13_{i,K/2}$ et les sorties des amplificateurs $13_{i,4}$, $13_{i,5}$ et $13_{i,6} = 13_{i,K}$ sont respectivement appariées aux entrées de K/2 antennes omnidirectionnelles à double polarisation linéaire croisée verticale et horizontale $14_{i,1,4}$, $14_{i,2,5}$ et $14_{i,3,6}$ de petites dimensions. Tous ces composants sont inclus dans un boîtier par exemple en forme de champignon. Comme on le verra ci-après, le fonctionnement à diversité de polarisation et en  bande étroite des modules d'émission ainsi que la diversité spatiale due aux antennes accroît la sensibilité de détection des cibles à travers les modules de réception par réduction du couplage entre le module d'émission et un module de réception. La diversité des fréquences et de polarisation à l'émission améliore la réception de signaux réfléchis par des petits objets OB sur la piste et ainsi la localisation de ceux-ci.

Un module de réception $2_i$ comprend successivement une antenne omnidirectionnelle à double polarisation croisée verticale et horizontale $21_i$ de manière à recevoir les composantes horizontale et verticale d'un signal rétrodiffusé issu de chaque signal émis avec une polarisation horizontale ou verticale, un filtre passe-bande $22_i$, un amplificateur $23_i$, un convertisseur analogique-numérique $24_i$, un modulateur optique $25_i$ relié au démodulateur optique respectif $34_i$ dans le centre 3 à travers une fibre optique, et un démodulateur optique $26_i$ relié au modulateur optique respectif $35_i$ dans le centre 3 à travers une autre fibre optique. Le filtre passe-bande $22_i$ a une bande de fréquence étroite qui recouvre au plus les bandes de fréquence des porteuses émises par les modules d'émission. Les signaux mélangés reçus des modules d'émission sont numérisés dans le convertisseur $24_i$ à une faible fréquence d'échantillonnage puisque la bande passante du filtre $22_i$ est étroite. Typiquement pour une puissance d'émission de l'ordre du watt dans chaque module d'émission, un convertisseur analogique-numérique $24_i$ à 12 bits est suffisant pour couvrir précisément les variations de puissance de réception due à la détection de cible. La puissance totale rayonnée par l'ensemble des modules du système radar est en général inférieure à 100 W. Dans le centre 3, le démodulateur optique respectif $34_i$ récupère les signaux mélangés reçus pour être analysés fréquentiellement par l'unité 36 afin de caractériser les différentes phases de vol d'un aéronef de l'approche jusqu'au roulage sur la piste, comme on le verra ci-dessous. La réception étant cohérente, le démodulateur optique $26_i$ de chaque module de réception $2_i$ reçoit par le modulateur optique respectif $35_i$ un signal commun de référence temporel et fréquentiel qui dépend du signal de référence SR fourni par la source 31 et qui sert à synchroniser tous les modules de réception avec les émissions synchrones des modules d'émission.

En variante, les deux fibres optiques reliant le module de réception $2_i$ et le centre 3 sont remplacées par une unique fibre optique bidirectionnelle.

Les modules d'émission et les modules de réception sont alimentés électriquement par exemple à travers des câbles électriques enterrés reliés au réseau électrique des feux de la piste et éventuellement de taxiway puisque la puissance nécessaire à leur fonctionnement est de quelques kilovoltampères.

Selon la réalisation illustrée, les faisceaux de fibres optiques FO, les modulateurs optiques $33_{1,1}$ à $33_{I,K}$, les démodulateurs $34_1$ à $34_I$ et les démodulateurs $35_1$ à $35_I$ dans le centre 3 ainsi que les démodulateurs optiques $11_{1,1}$ à $11_{I,K}$ dans les modules d'émission et les modulateurs $25_1$ à $25_I$ et les démodulateurs $26_1$ à $26_I$ dans les modules de réception constituent un réseau de télécommunications optique. Ce réseau peut être remplacé par un réseau local de câbles de transmission, ou bien par un réseau de radiocommunications de faible portée de type satisfaisant le label WiFi ("Wireless Fidelity" en anglais) ou WIMAX ("World wide Interoperability Microwave Access" en anglais) si la sécurité de la transmission des signaux entre le centre et les modules n'est pas contraignante.

Le traitement des signaux reçus dans l'unité 36 repose sur l'exploitation cohérente d'une matrice de diffusion multistatique dont les dimensions dépendent du produit I×K du nombre I de modules d'émission par le nombre de fréquences propres par module d'émission et du nombre I de modules de réception. L'unité 36 est reliée à une interface homme-machine (IHM) 41 et à un serveur de gestion de base de données 42 dans une tour de contrôle 4. Selon une variante, le serveur 42 est intégré dans l'unité 36. Selon une autre variante, l'unité 36 avec le serveur 42 est incluse dans la tour de contrôle et est reliée aux autres éléments du centre de distribution et de traitement 3 par une liaison locale ou distante. Selon encore une autre variante, le centre 3 éventuellement avec le serveur 42 est installé dans un local protégé à proximité de la tour de contrôle. L'interface 41 comprend notamment un pupitre avec des postes de contrôle radar pour suivre le déplacement d'aéronefs en temps réel et toute modification de l'état de la piste et sélectionner des modes de fonctionnement du système radar. Le serveur 42 gère notamment des informations sur le trafic aérien autour de la tour de contrôle utiles à une sélection de mode et mémorise des réponses du système radar transmises par l'unité 36, notamment au cours de phases d'apprentissage.

L'unité 36 comprend un analyseur de spectre numérique 360 relié aux sorties des démodulateurs optiques $34_1$ à $34_I$. L'analyseur de spectre extrait des I signaux reçus par tous les modules de réception $2_1$ à $2_I$ à travers le système optique 25-FO-34, I × I groupes ayant chacun K signaux reçus respectivement associés aux I × I couples bistatiques de modules d'émission et de réception, puisqu'a priori chaque module de réception est susceptible de recevoir des signaux émis à toutes les I × K fréquences d'émission $f_{1,1}$ à $f_{I,K}$ attribuées aux modules d'émission $1_1$ à $1_I$. La matrice de diffusion multistatique est construite pour les couples bistatiques de modules en fonction des $I^2 \times K$ signaux reçus en sortie de l'analyseur de spectre. Les I × I groupes de signaux reçus sont appliqués aux entrées de trois modules de traitement 361, 362 et 363 inclus dans l'unité 36 du type multiprocesseur. Les quatre éléments 360 à 363 sont représentés sous forme de blocs fonctionnels ayant un lien avec l'invention et peuvent correspondre à des modules matériels et/ou logiciels.

Comme montré aux figures 2, 4, 5 et 6, le fonctionnement du système radar selon l'invention repose sur trois modes de surveillance qui peuvent être simultanément établis dans les trois modules de traitement 361, 362 et 363 qui sont un processeur de trajectographie 361 assurant un mode M1 de surveillance de trajectographie d'une cible aérienne A dans les environs de la piste, un analyseur de roulage 362 assurant un mode M2 d'analyse de cible AR au roulage sur la piste et un détecteur d'objet 163 assurant un mode M3 de détection d'objet OB sur la piste. Les processeurs 361, 362 et 363 sont fonctionnels simultanément dans l'unité 36. Les modes de surveillance sont sélectionnables par chaque opérateur devant un poste dans la vigie de la tour de contrôle 4, bien qu'en variante au moins un poste soit dédié à chaque mode.

Pour tous les modes, le système radar opère de manière passive par rapport aux cibles, sans coopération avec celles-ci et détecte les échos diffusés par des cibles aériennes telles que des aéronefs, y compris ceux non équipés de transpondeur, se déplaçant dans une zone de surveillance par exemple de 15 km environ autour de la piste. Les modules d'émission et les modules de réception fonctionnent continûment et simultanément. A chaque période d'intégration, par exemple de l'ordre de 0,1 s, toutes les directions de l'espace sont rafraîchies et traitées par l'unité 36 ce qui permet de détecter tout incident comme un écart de trajectoire ou un objet sur la piste. Grâce à la configuration multistatique, une défaillance de quelques modules d'émission et/ou de quelques modules de réception engendre une faible dégradation de la surveillance par le système radar de l'invention.

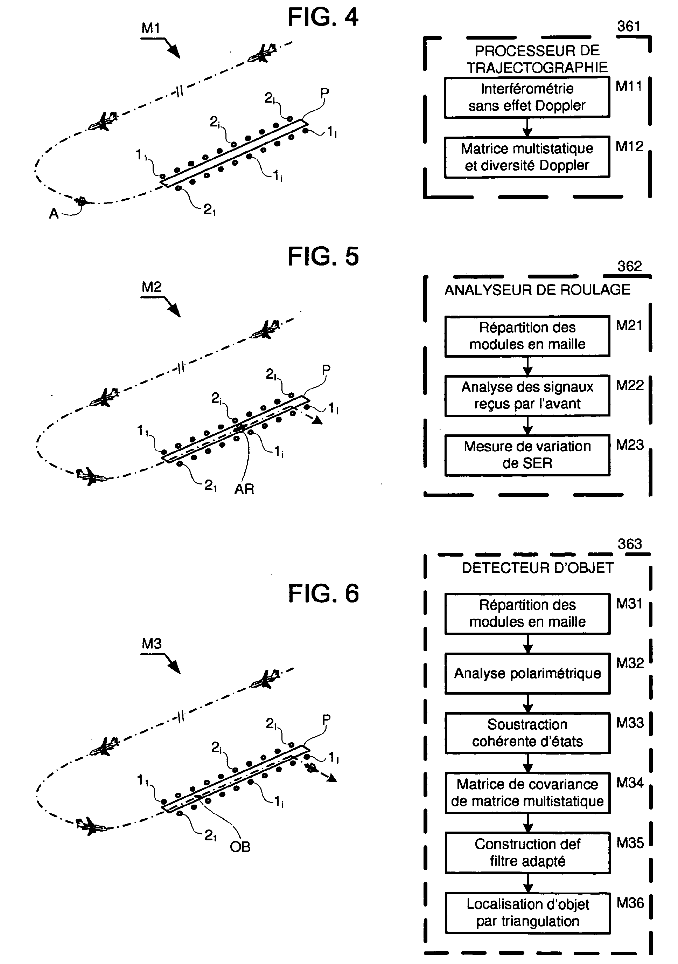

Le mode de surveillance de trajectographie M1 pour suivre l'approche de la piste P par une cible aérienne A comprend deux étapes M11 et M12, en référence à la figure 4. Le processeur de trajectographie 361 recueille les signaux de tous les modules de réception et les traite globalement en considérant l'ensemble des modules d'émission pour périodiquement détecter et trajectographier précisément chaque aéronef en approche au moyen des K groupes de I porteuses de fréquences différentes.

Comme chaque module d'émission $1_i$ émet continuellement au moins une porteuse monochromatique dont la fréquence $f_{i,k}$ lui est associée dans le processeur 361, ce dernier associe périodiquement par la transformée de Fourier dans l'analyseur de spectre 360 l'amplitude complexe du signal reçu à la fréquence $f_{i,k}$ par un module de réception $2_j$ au couple bistatique de modules $1_i$-$2_j$ et à une position de cible, avec $1 \le i, j \le I$. Le signal reçu dépend de la distance bistatique égale à la somme de la distance module d'émission $1_i$ à la cible et de la distance de la cible au module de réception $2_j$, de la vitesse la cible et de son orientation par rapport aux modules. L'amplitude complexe est mesurée à une fréquence d'échantillonnage supérieure au double de la fréquence Doppler maximale des cibles aériennes surveillées.

Les ambiguïtés résultant du caractère lacunaire du réseau d'antennes du système radar sont éliminées par un pistage moins complexe que celui connu basé sur une estimation compliquée par maximum de vraisemblance des trois cordonnées de la position de la cible et des trois cordonnées de la vitesse de la cible, soit 6 inconnues. A chaque période d'intégration, le processeur 361 estime à l'étape M11 la localisation de la cible aérienne par interférométrie multistatique des signaux reçus par les modules de réception dans un espace à trois dimensions correspondant aux coordonnées de position de cible en ignorant d'abord l'effet Doppler et donc la vitesse de la cible.

Puis à l'étape M12, le processeur 36 combine le traitement de la matrice multistatique des signaux reçus respectivement associés aux couples bistatiques et aux fréquences des signaux émis et la diversité de l'effet Doppler en vue d'une localisation multistatique interférométrique des cibles aériennes détectées, de manière à éliminer les ambiguïtés de localisation inhérentes à l'interférométrie précédente. Des images d'aéronefs se trouvant simultanément dans la zone surveillée par le système radar sont séparées par une analyse spectrale fiable et non ambiguë distinguant leurs fréquences Doppler. Pour chaque terme de la matrice multistatique, le processeur 361 effectue une détection Doppler non ambiguë. Cette analyse spectrale est effectuée sur les signaux reçus par l'antenne de chaque module de réception ; à grande distance de la piste, les analyses spectrales pour les fréquences Doppler effectuées à partir de chaque couple bistatique de modules d'émission et de réception sont identiques. Ceci est possible dans la mesure où les effets Doppler sont différents pour des couples de module différents $1_i$-$2_j$. En conséquence, moyennant une résolution Doppler suffisante, le processeur 361 discerne les projections du vecteur vitesse de la cible sur chaque direction entre celle-ci et un module de réception. La mesure Doppler apporte une information supplémentaire contribuant à localiser la cible aérienne. La localisation des aéronefs, y compris verticalement, selon l'invention est meilleure qu'avec un radar conventionnel.

En phase d'approche finale, la dépendance de l'analyse spectrale Doppler en fonction du couple bistatique de modules considéré est prise en compte par le processeur 361 ce qui permet une meilleure observabilité des paramètres de position de la cible dans l'interface homme-machine 4. Dans ce cas au moins, l'analyse spectrale Doppler a posteriori peut être utilisée pour nettoyer les ambiguïtés de l'interférométrie multistatique.

Tout écart de trajectoire est détecté.

En présence de plusieurs cibles, le processus combinant le traitement de la matrice multistatique et la diversité de l'effet Doppler pour chaque cible est additif, la matrice multistatique traitée résultant de la somme des matrices multistatiques correspondant aux cibles.

Le processeur de trajectographie 361 peut également servir pour suivre des aéronefs pendant le décollage.

Pendant le mode d'analyse de cible au roulage M2 pour surveiller au moins toute la phase de roulage d'un aéronef, l'analyseur de roulage 362 surveille la piste P de manière à détecter l'aéronef, ou tout autre véhicule, roulant sur la piste P et à mesurer sa vitesse avec précision. Le mode M2 comprend des étapes M21 à M23, en référence à la figure 5.

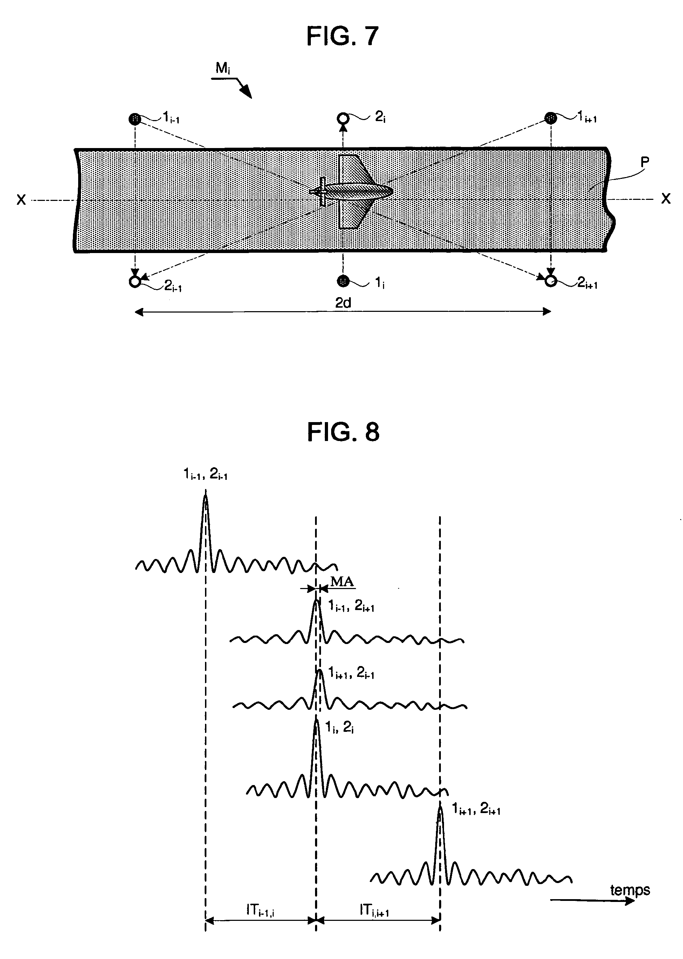

Pour analyser des aéronefs au roulage, ou à quelques mètres au-dessus de la piste en phase d'atterrissage finale ou de début de décollage, l'analyseur 362 répartit à l'étape M21 les modules d'émission $1_1$ à $1_I$ et les modules de réception $2_1$ à $2_I$ disposés alternativement sur deux lignes parallèles à la piste P en I - 2 mailles superposées deux à deux. Comme montré à la figure 7, chaque maille $M_i$, avec $1 < i < I$, comprend trois couples bistatiques de module d'émission et de module de réception $1_{i-1}$-$2_{i-1}$, $1_i$-$2_i$ et $1_{i+1}$-$2_{i+1}$ ayant des axes bistatiques perpendiculaires à la piste et situés successivement le long de la piste. Au moins les signaux reçus par les trois modules de réception des trois couples bistatiques $1_{i-1}$-$2_{i+1}$, $1_i$-$2_i$ et $1_{i+1}$-$2_{i-1}$ dans la maille $M_i$ dont les axes sont sensiblement concourants au centre de la maille $M_i$ servent à surveiller le déplacement d'un aéronef A par évaluation de la section efficace radar SER d'un aéronef roulant sur la piste P, conjointement à la réception cohérente.

Puisque selon l'un des objectifs de l'invention, la puissance moyenne d'émission d'un module d'émission est faible, de l'ordre du watt, l'analyseur 362 ignore par filtrage, pour chaque module de réception $2_i$, les signaux émis par les modules d'émission éloignés du module de réception $2_i$ de plus du double 2d de la distance entre deux modules successifs, ces modules d'émission éloignés ne présentant pas un bilan énergétique suffisant. Chaque module d'émission $1_i$ émet des signaux à des fréquences proches, différentes d'au plus quelques centaines de hertz (figure 3), qui interfèrent selon des fréquences de battement au niveau de l'aéronef ciblé. Le détecteur 362 détecte et analyse les signaux reçus par les modules $2_{i-1}$, $2_i$ et $2_{i+i}$ de la maille $M_i$ pour localiser précisément l'objet OB sur la piste.

De plus le détecteur 362 fonctionne dans un mode multistatique de diffusion vers l'avant FSR ("Forward Scattering Radar" en anglais). A l'étape M22, pour chaque module de réception $2_i$, l'analyseur 362 ignore par filtrage les signaux émis directement par des modules d'émission situés du même côté de la piste P, comme les modules d'émission voisins $1_{i-1}$ et $1_{i+1}$, et n'analyse périodiquement que les signaux reçus par "l'avant" du module $2_i$ à travers la piste P, comme les signaux des modules d'émission voisins $1_{i-2}$, $1_{i-1}$, $1_i$, $1_{i+1}$ et $1_{i+2}$. L'élimination des signaux de trajet direct entre un module de réception $2_i$ et les modules d'émission voisins $1_{i-1}$ et $1_{i+1}$ est favorisée spatialement par la disposition alternée des modules d'émission et de réception sur chaque côté de la piste. Lorsque l'aéronef A au roulage traverse à la fois les axes bistatiques des trois couples successifs de module $1_{i-1}$-$2_{i+1}$, $1_i$-$2_i$ et $1_{i+1}$-$2_{i-1}$, la section efficace radar SER augmente de manière extrêmement importante, mais pendant un temps très court, comme représenté à la figure 8. Un mésalignement temporel MA entre les pics de puissance reçue par les modules de réception $2_{i-1}$, $2_i$ et $2_{i+1}$ résulte d'une position désaxée de l'aéronef par rapport à l'axe longitudinal XX de la piste. La différence des largeurs de deux intervalles de temps $IT_{i-1,i}$ et $IT_{i,i+1}$ entre les passages de l'aéronef successivement à travers les axes bistatiques des couples de module $1_{i-1}$-$2_{i-1}$, $1_i$-$2_i$ et $1_{i+1}$-$2_{i+1}$ est due à des variations de vitesse de l'aéronef, en l'occurrence un ralentissement de celui-ci après atterrissage. L'augmentation de la section efficace radar SER est directement liée, lorsque la fréquence d'émission est élevée, au masquage et à la création d'une zone d'ombre derrière l'aéronef. Plus l'ombre est importante, plus la section SER est grande. La répartition alternée des modules d'émission et de réception le long de la piste permet à l'analyseur 362 d'éliminer spatialement parmi les signaux reçus par chaque module de réception $2_i$ ceux qui sont émis directement notamment par les deux modules d'émission les plus proches $1_{i-1}$ et $1_{i+1}$ situés du même côté de la piste et qui sont inutiles pour la localisation d'une cible au droit du module de réception $2_i$. Le maximum de la section SER est approximativement égal à celle d'une plaque métallique de dimension égale à la section de la cible perpendiculaire à l'axe du couple de module bistatique considéré.

A l'étape M23, l'analyseur 362 mesure périodiquement la variation de la section efficace radar d'un aéronef AR au voisinage des axes bistatique des trois couples bistatiques $1_{i-1}$-$2_{i+1}$, $1_i$-$2_i$ et $1_{i-1}$-$2_{i+1}$ dans la maille $M_i$ pour en déduire des informations intéressantes sur l'aéronef, telles que la position en temps réel de l'aéronef, la vitesse de l'aéronef par mesure différentielle des temps de coupure de l'axe bistatique $1_i$-$2_i$, la déviation de la trajectoire de l'aéronef déduit d'un défaut de reproductibilité de la section SER de l'aéronef. L'analyseur 362 peut également servir à mesurer notamment les sections d'un aéronef transversalement à un axe bistatique $1_i$-$2_i$ et définie par l'amplitude et la largeur du pic de la section SER de l'aéronef. Les sections des aéronefs et d'autres objets ou véhicules susceptibles de se trouver incidemment sur la piste sont de préférence pré-mémorisées dans le serveur de gestion 42 et classifiées par leurs tailles. En se référant de nouveau à la figure 7, des signaux émis par les modules $1_{i-1}$ et $1_{i+1}$ reçus respectivement par les modules $2_{i+1}$ et $2_{i-1}$ et mesurés simultanément par l'analyseur 362 présentent des caractéristiques de section SER identiques lorsque l'aéronef est aligné sur l'axe longitudinal de la piste au droit de l'axe bistatique $1_i$-$2_i$. Il en est de même avec des signaux émis par les modules $1_{i-2}$ et $1_{i+2}$ reçus respectivement par les modules $2_{i+2}$ et $2_{i-2}$. Si l'aéronef suit l'axe longitudinal de la piste P, les signaux émis par les modules d'émission successifs $1_{i-1}$, $1_i$ et $1_{i+1}$ respectivement reçus par les modules $2_{i-1}$, $2_i$ et $2_{i+1}$ présentent des caractéristiques de section SER identiques à des instants différents qui sont mesurés par l'analyseur 362 pour en déduire avec précision la vitesse de l'aéronef.

Le détecteur d'objet 363 inspecte la piste pour le mode de détection d'objet M3, normalement après libération de la piste P par un aéronef. En se référant à la figure 6, le mode M3 comprend des étapes M31 à M36.

A l'étape M31, le détecteur 363 répartit les modules d'émission $1_1$ à $1_I$ et les modules de réception $2_1$ à $2_1$ disposés alternativement sur deux lignes parallèles à la piste P en I - 2 mailles superposées deux à deux servant à localiser un objet OB sur la piste comme montré à la figure 9 et de la même manière que pour le mode M2, chaque maille $M_i$ comportant trois couples de module d'émission et de module de réception $1_{i-1}$-$2_{i-1}$, $1_i$-$2_i$ et $1_{i+1}$-$2_{i+1}$ ayant des

axes bistatiques perpendiculaires à la piste et situés successivement le long de la piste, avec 1 < i < I. Au moins trois parmi les neuf couples bistatiques de modules d'émission et de réception appartenant à la maille $M_i$ servent à localiser par triangulation à l'étape finale M36 conjointement à la réception cohérente au moins un objet OB, tel qu'un débris d'aéronef, dans la maille $M_i$ sur la piste. La triangulation dans la maille est relative aux signaux émis par les trois modules d'émission de la maille $M_i$ et reçus par l'un des modules de réception de la maille. Trois triangulations respectivement par rapport aux signaux reçus par les trois modules de réception affinent la localisation d'un objet dans la maille.

Comme pour le mode M2, le détecteur 363 ignore par filtrage, pour chaque module de réception $2_i$, les signaux émis par les modules d'émission éloignés du module de réception $2_i$ de plus du double 2d de la distance entre deux modules successifs, ces modules d'émission éloignés ne présentant pas un bilan énergétique suffisant. Chaque module d'émission $1_i$ émet des signaux à des fréquences proches, différentes d'au plus quelques centaines de hertz (figure 3), dont les fréquences de battement au niveau d'un objet ciblé sont détectées et analysées par le détecteur 363 dans les signaux reçus par les modules $2_{i-1}$, $2_i$ et $2_{i+1}$ de la maille $M_i$ pour localiser précisément l'objet OB sur la piste. Puisque chaque module d'émission comprend trois antennes à double polarisation croisée, la maille $M_i$ comprend 3x3 points d'émission et 3 points de réception qui constituent globalement un interféromètre présentant une grande base entre les trois modules de réception et 27 degrés de liberté exploités par le détecteur 363 pour radiolocaliser l'objet OB.

Pour un couple radar bistatique de module d'émission et de module de réception distants de $D_{ER}$ et une cible ayant σ comme surface équivalente radar SER et située à une distance $D_{EC}$ du module d'émission et une distance $D_{CR}$ du module de réception, le rapport de la puissance $P_C$ reçue via la cible sur la puissance $P_{ER}$ reçue en trajet direct du module d'émission vers le module de réception est donnée approximativement par la formule suivante, en faisant abstraction de gains d'antenne et de pertes de propagation :

$$P_C/P_{ER} \ = \ \sigma \ D_{ER}^2/( \ 4\pi \ D_{EC}^2 \ D_{CR}^2) \ .$$

Au moyen de cette formule, par exemple pour un objet OB de surface équivalente radar σ égale à 0,1 $m^2$ située sur une piste de largeur WP = 50 m, une distance d = 150 m entre modules d'émission et de réception et une distance de 130 m entre les lignes parallèles LG et LD des modules, on montre que sur le sol la maille $M_i$ comporte par exemple seulement 5 couples bistatiques $1_{i-1}$-$2_{i-1}$, $1_{i-1}$-$2_{i+1}$, $1_i$-$2_i$, $1_{i+1}$-$2_{i-1}$ et $1_{i+1}$-$2_{i+1}$ présentant une dynamique inférieure à 60 dB, et tous les couples bistatiques de la maille présentent une dynamique inférieure à 70 dB. Ces exemples montrent que le détecteur d'objet 363 doit rejeter d'au moins 70 dB le niveau de couplage du trajet direct de chaque couple bistatique pour détecter des objets les plus petits dont les échos sont susceptibles d'être masqués par des échos d'objets plus grands. Ceci conduit à des lobes secondaires des antennes de réception ayant une puissance suffisante pour détecter des objets de petite dimension.

Préalablement à la radiolocalisation M36 de l'objet par triangulation, le mode M3 comprend les étapes de traitement de signaux reçus suivantes M32 à M35 qui peuvent être dupliquées au moins pour certaines dans l'analyseur de roulage 362. Pour accomplir la réjection du couplage par trajet direct pour chaque couple bistatique de module d'émission et de module de réception dans la maille $M_i$ et produire des signaux filtrés contenant essentiellement des signaux rétrodiffusés par des petits objets à détecter sur la piste, le détecteur d'objet 363 cumule des réductions de couplage selon trois traitements suivants des signaux reçus par chacun des trois modules de réception de la maille.

Un premier traitement M32 dans un analyseur polarimétrique préalablement calibré consiste à exploiter la diversité de polarisation linéaire des signaux émis par les modules d'émission et par suite les polarisations des signaux reçus dans un module de réception par rétrodiffusion des signaux émis. L'analyseur polarimétrique pour chaque couple bistatique de modules d'une maille $M_i$ combine les composantes horizontales et verticales des signaux reçus par le module de réception du couple pour les K/2 fréquences des signaux émis avec la polarisation horizontale du module d'émission du couple et parallèlement combine séparément les composantes horizontales et verticales des signaux reçus par le module de réception du couple pour les K/2 autres fréquences des signaux émis avec la polarisation verticale du module d'émission du couple. L'analyseur polarimétrique analyse l'amplitude des K composantes horizontales et verticales combinées de manière à minimiser le couplage de trajet direct entre le module d'émission et le module de réception du couple aux instants de puissance élevée. En effet la puissance du signal de trajet direct est élevée par rapport à celle du signal utile réfléchi par un objet. La diversité de polarisation linéaire des signaux émis confère ainsi une grande sensibilité de la détection d'objet de petite réflectivité.

Un deuxième traitement M33 consiste en une détection de changement, de type soustractif cohérent, qui accroît la sensibilité de détection d'objet. Préalablement lors de chacune de phases cycliques d'apprentissage, le mode de détection d'objet M3 est sélectionné dans l'unité 36 afin que le détecteur d'objet 363 transmette un état de référence de la piste libre de tout objet et aéronef au serveur de gestion 42 qui le mémorise. Cet état de référence pré-mémorisé comprend notamment les amplitudes et phases des I x K signaux émis et des $I^2 \times K$ signaux reçus. En exploitation du mode M3 à l'étape M33, à chaque période d'intégration, le détecteur d'objet 363 lit dans le serveur 42 l'état de référence rafraîchi et le soustrait de manière cohérente à l'état de la piste courant déduit du traitement des signaux reçus par les modules de réception au moins lorsque l'analyseur de roulage 362 signale cycliquement, par exemple au plus toutes les minutes, un dégagement d'un aéronef de la piste, ou lorsque le processeur de trajectographie 361 signale un décollage d'un aéronef ou une approche terminale imminente d'un aéronef. Si la comparaison révèle au moins un objet intrusif sur la piste, le détecteur 362 transmet une alarme vers l'interface IHM 4 dans la tour de contrôle 4. Le détecteur 363 distingue trois états de la piste : piste non libérée de cible roulant, piste libérée par une cible roulant et piste libre de tout objet suspect. Ce deuxième traitement par détection de changement cohérent est comparable à une différence cohérente d'échos dans un Radar à ouverture synthétique SAR ("Synthetic Aperture Radar" en anglais).

Un troisième traitement M34-M35 est un traitement à haute résolution de type CAPON spatial de manière à atténuer tout signal parasite dû au trajet direct entre les modules des 9 couples bistatiques dans chaque maille. Il concerne directement les matrices multistatiques interférométriques associées aux mailles. Pendant la phase d'apprentissage, le détecteur d'objet 363 met la matrice de chaque maille pour chaque polarisation donnée, horizontale ou verticale, sous la forme d'un vecteur colonne à $9 \times 9 = 27$ éléments correspondant aux signaux reçus des neuf couples bistatiques de module d'émission et de réception dans la maille, soit le vecteur à l'instant t pour une polarisation donnée :

$$S(t) = [S_{i-1,1+dk,j-1}, \ldots\ S_{i,1,j}, \ldots\ S_{i,K/2+dk,j} \ldots, \ S_{i+1,K/2+dk,j+1}]^t,$$

avec $i - 1 \le i, j \le i + 1$ et $dk = 0$ ou $dk = K/2$.

Le détecteur 363 forme ensuite à l'étape M34, par intégration sur une durée prédéterminée T, par exemple toutes les 0,1 s, la matrice de covariance

$$R_{SS} = <S\ S^t> = \int_0^T S\ S^t\ dt.$$

Par ailleurs, le vecteur directionnel à 27 éléments associé à un objet ciblé candidat OB, positionné en M(x,y) est de la forme :

$$D(t,x,y) = [\ldots\ (D_{i,k,j}(x,y)\ldots]^t$$

avec

$$D_{i,k,j} = \alpha(M)\ exp\{-j\ 2\pi\ f_{i,k}[t-(1_iM\ +\ 2_jM)/c]\ +\ \phi_{i,k,j}\}$$

où $\Phi_{i,k,j}$ est une phase initiale prédéterminée lors d'une calibration du système radar. A l'étape M35, le détecteur 363 construit numériquement un filtre adapté pour filtrer les signaux reçus par les modules de réception de la maille. La fonction de transfert du filtre adapté numérique est de la forme pour la polarisation donnée :

$$h(t) = D^H\ R_{SS}^{-1}\ S/(D^H\ R_{SS}^{-1}\ D),$$

où H est l'opérateur de transposition et de conjugaison complexe et -1 l'opérateur d'inversion.

Selon d'autres réalisations, au lieu de séparer les signaux reçus dans les modules de réception en fonction de nombreuses fréquences $f_{i,k}$ par l'analyseur de spectre 360, les signaux émis par les modules d'émission supportent des codes orthogonaux afin de séparer les contributions des signaux émis dans le traitement des signaux reçus par les modules de réception dans un décodeur de signaux orthogonaux en entrée de l'unité de traitement 36.

Par exemple, les signaux émis sont des signaux de type OFDM ("Orthogonal Frequency Division Multiplex" en anglais). Chaque module d'émission émet des sous-porteuses sur K fréquences différentes communes aux modules d'émission. K/2 sous-porteuses ont une première polarisation et K/2 autres sous-porteuses ont une deuxième polarisation orthogonale à la première polarisation. Les sous-porteuses émises par le module d'émission supportent un code respectif différent des codes attribués aux autres modules d'émission, les codes étant à plusieurs états de phase et/ou états d'amplitude.

L'invention décrite ici concerne un procédé de surveillance de cibles, y compris des cibles au niveau du sol sur une piste, et un système radar pour mettre en oeuvre le procédé. Selon une implémentation, les étapes du procédé de l'invention sont déterminées par les instructions d'un programme d'ordinateur incorporé dans le système. Le programme comporte des instructions qui, lorsque ledit programme est exécuté dans un processeur du système dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement peut être n'importe quelle entité ou dispositif capable de stocker le programme.

## Revendications

1. Procédé pour surveiller des cibles sur une piste (P) au moyen de modules d'émission aptes à émettre des signaux et de modules de réception aptes à recevoir des signaux en diversité de polarisation, lesdits modules d'émission et de réception étant répartis autour de la piste (P), les modules d'émission ($1_1$ - $1_l$) et les modules de réception ($2_1$ - $2_l$) sont répartis alternativement le long de chacun des côtés longitudinaux de la piste (P), et **caractérisé en ce que** le procédé comprend une émission de signaux orthogonaux par les modules d'émission à raison d'au moins deux signaux orthogonaux par module d'émission, une réception cohérente avec l'émission de signaux reçus par les modules de réception, et une détection (M3) d'objet (OB) sur la piste basée sur une répartition (M31) des modules en des mailles ($M_i$) comportant chacune trois couples de module d'émission et de module de réception voisins ($1_{i-1}$-$2_{i-1}$, $1_i$-$2_i$, $1_{i+1}$-$2_{i+1}$) et sur une radiolocalisation (M36) de l'objet par triangulation et interférométrie dans au moins une maille.

2. Procédé conforme à la revendication 1, comprenant une émission de signaux par module d'émission pour partie à une première polarisation linéaire et pour partie à une deuxième polarisation linéaire orthogonale à la première polarisation, et la détection d'objet (M3) comprend périodiquement pour chaque couple bistatique de module d'émission et de module de réception dans une maille ($M_i$), une analyse polarimétrique (M32) des composantes selon les première et deuxième polarisations des signaux reçus par le module de réception du couple et issus des signaux orthogonaux aux première et deuxième polarisations linéaires émis par le module d'émission de la maille.

3. Procédé conforme à la revendication 1 ou 2, selon lequel la détection d'objet (M3) comprend périodiquement pour chaque maille ($M_i$) une soustraction cohérente (M33) d'un état de la piste libre pré-mémorisé à un état de la piste courant déduit du traitement des signaux reçus par les modules de réception de la maille.

4. Procédé conforme à l'une quelconque des revendications 1 à 3, selon lequel la détection d'objet (M3) comprend périodiquement pour chaque maille ($M_i$) une détermination (M34) d'une matrice de covariance d'une matrice multistatique interférométrique des signaux reçus par les modules de réception ($1_{i-1}$-$2_{i-1}$, $1_i$-$2_i$, $1_{i+1}$-$2_{i+1}$) dans la maille ($M_i$) et une construction (M35) d'un filtre adapté dépendant de la matrice de covariance pour filtrer les signaux par les modules de réception de la maille.

5. Procédé conforme à l'une quelconque des revendications 1 à 4, comprenant une analyse (M2) de cible (AR) se déplaçant sur la piste basée sur la répartition (M21) des modules en les mailles ($M_i$), sur une analyse périodique (M22) des signaux reçus par l'avant de chaque module de réception ($2_i$) à travers la piste, et sur une mesure périodique (M23) de la variation de la section efficace radar de la cible (AR) se déplaçant sur la piste au voisinage des axes bistatique de trois couples ($1_{i-1}$-$2_{i+1}$, $1_i$-$2_i$, $1_{i-1}$-$2_{i+1}$) dans une maille (Mi) qui sont sensiblement concourants au centre de la maille.

6. Procédé conforme à l'une quelconque des revendications 1 à 5, comprenant une surveillance (M1) de trajectographie d'une cible aérienne (A) dans les environs de la piste basée sur une localisation périodique de la cible aérienne par interférométrie multistatique (M11) des signaux reçus par les modules de réception dans un espace à trois dimensions correspondant aux coordonnées de position de la cible en ignorant l'effet Doppler, et par une combinaison (M12) d'un traitement d'une matrice multistatique des signaux reçus et de la diversité de l'effet Doppler.

7. Procédé conforme à l'une quelconque des revendications 1 à 6, selon lequel les signaux orthogonaux émis ont des fréquences différentes.

8. Système pour surveiller des cibles sur une piste (P) au moyen de modules d'émission aptes à émettre des signaux et de modules de réception aptes à recevoir des signaux en diversité de polarisation, lesdits modules d'émission et de réception étant répartis autour de la piste (P), ainsi qu'un moyen pour détecter un objet sur la piste, **caractérisé en ce que** les modules d'émission ($1_1$ - $1_i$) et les modules de réception ($2_1$ - $2_l$) sont répartis alternativement le long de chacun des côtés longitudinaux de la piste (P), les modules d'émission étant propres à émettre des signaux orthogonaux à raison d'au moins deux signaux orthogonaux par module d'émission, et **en ce que** le système comprend un moyen (331, 35, 26) pour une réception cohérente de signaux dans les modules de réception avec l'émission de signaux par les modules d'émission, et ledit moyen (363) pour détecter un objet (OB) sur la piste, dont la détection est basée sur une répartition des modules en des mailles ($M_i$) comportant chacune trois couples de module d'émission et de module de réception voisins ($1_{i-1}$-$2_{i-1}$, $1_i$-$2_i$, $1_{i+1}$-$2_{i+1}$) et sur une radiolocalisation de l'objet par triangulation et interférométrie dans au moins une maille.

9. Système conforme à la revendication 8, comprenant un moyen (362) pour analyser une cible (AR) propre à se déplacer sur la piste basée sur la répartition des modules en les mailles ($M_i$), sur une analyse périodique de signaux propres à être reçus par l'avant par chaque module de réception ($2_i$) à travers la piste, et sur une mesure périodique (M23) de la variation de la section efficace radar de la cible (AR) propre à se déplacer sur la piste au voisinage des axes bistatique de trois couples ($1_{i-1}$-$2_{i+1}$, $1_i$-$2_i$, $1_{i-1}$-$2_{i+1}$) dans une maille ($M_i$) qui sont sensiblement concourants au centre de la maille.

10. Système conforme à la revendication 8 ou 9, comprenant un moyen (361) pour surveiller la trajectographie d'une cible aérienne (A) dans les environs de la piste basée sur une localisation périodique de la cible aérienne par interférométrie multistatique (M11) des signaux propres à être reçus par les modules de réception dans un espace à trois dimensions correspondant aux coordonnées de position de la cible en ignorant l'effet Doppler, et par une combinaison (M12) d'un traitement d'une matrice multistatique des signaux propres à être reçus et de la diversité de l'effet Doppler.

11. Système conforme à la revendication 8, comprenant un moyen centralisé (3) pour transmettre par fibres optiques (FO) des signaux à émettre vers les modules d'émission ($1_1$ - $1_l$) et pour recevoir par fibres optiques (FO) des signaux propres à être reçus par les modules de réception ($2_1$ à $2_l$).

12. Programme d'ordinateur apte à être mis en oeuvre dans un système pour surveiller des cibles sur une piste (P) au moyen de modules d'émission et de modules de réception, **caractérisé en ce qu'**il comprend des instructions qui, lorsque le programme est exécuté dans le système, commandent une réception cohérente de signaux reçus par les modules de réception avec une émission de signaux orthogonaux émis par les modules d'émission, à raison d'au moins deux signaux orthogonaux par module d'émission, les modules d'émission ($1_1$ - $1_l$) et les modules de réception ($2_1$ - $2_l$) étant répartis alternativement le long de chacun des côtés longitudinaux de la piste (P), et une détection (M3) d'objet (OB) sur la piste basée sur une répartition (M31) des modules en des mailles ($M_i$) comportant chacune trois couples de module d'émission et de module de réception voisins ($1_{i-1}$-$2_{i-1}$, $1_{i+1}$-$2_{i+1}$) et sur une radio-localisation (M36) de l'objet par triangulation et interférométrie dans au moins une maille.

**Patentansprüche**

1. Verfahren zum Überwachen von Zielen auf einer Piste (P) mithilfe von Sendemodulen, die geeignet sind, Signale zu senden, und von Empfangsmodulen, die geeignet sind, Signale mit Polarisations-Diversity zu empfangen, wobei die Sende- und Empfangsmodule um die Piste (P) herum verteilt sind, die Sendemodule ($1_1$-$1_l$) und die Empfangs-module ($2_1$ - $2_l$) abwechselnd entlang jeder der Längsseiten der Piste (P) verteilt sind, und **dadurch gekennzeichnet, dass** das Verfahren umfasst: ein Senden von orthogonalen Signalen durch die Sendemodule, und zwar von mindestens zwei orthogonalen Signalen pro Sendemodul, einen mit dem Senden kohärenten Empfang von Signalen, die durch die Empfangsmodule empfangen werden, und eine Detektion (M3) eines Objekts (OB) auf der Piste, die auf einer Verteilung (M31) der Module in Maschen ($M_i$), welche jeweils drei benachbarte Paare von einem Sende-modul und einem Empfangsmodul ($1_{i-1}$-$2_{i-1}$, $1_i$-$2_i$, $1_{i+1}$-$2_{i+1}$) aufweisen, und auf einer Funkortung (M36) des Objekts durch Triangulation und Interferometrie in mindestens einer Masche basiert.

2. Verfahren nach Anspruch 1, welches ein Senden von Signalen durch ein Sendemodul teilweise mit einer ersten linearen Polarisation und teilweise mit einer zweiten linearen Polarisation, die zu der ersten Polarisation orthogonal ist, umfasst, und wobei die Detektion eines Objekts (M3) periodisch für jedes bistatische Paar eines Sendemoduls und eines Empfangsmoduls in einer Masche ($M_i$) eine polarimetrische Analyse (M32) der Komponenten gemäß der ersten und der zweiten Polarisation der Signale umfasst, die durch das Empfangsmodul des Paares empfangen wurden und sich aus den zu der ersten und zweiten linearen Polarisation orthogonalen Signalen ergeben, die von dem Sendemodul der Masche gesendet wurden.

3. Verfahren nach Anspruch 1 oder 2, wobei die Detektion eines Objekts (M3) periodisch für jede Masche ($M_i$) eine kohärente Subtraktion (M33) eines zuvor gespeicherten Zustands der freien Piste von einem aktuellen Zustand der Piste, der aus der Verarbeitung der durch die Empfangsmodule der Masche empfangenen Signale abgeleitet wurde, umfasst.

4. Verfahren nach einem der Ansprüche 1 bis 3, wobei die Detektion eines Objekts (M3) periodisch für jede Masche ($M_i$) eine Bestimmung (M34) einer Kovarianzmatrix einer multistatischen interferometrischen Matrix der Signale, die durch die Empfangsmodule ($1_{i-1}$-$2_{i-1}$, $1_i$-$2_i$, $1_{i+1}$-$2_{i+1}$) in der Masche ($M_i$) empfangen wurden, und eine Konstruktion (M35) eines von der Kovarianzmatrix abhängigen angepassten Filters zum Filtern der Signale durch die Empfangsmodule der Masche umfasst.

5. Verfahren nach einem der Ansprüche 1 bis 4, welches eine Analyse (M2) des sich auf der Piste bewegenden Ziels (AR) umfasst, die auf der Verteilung (M21) der Module in den Maschen ($M_i$), auf einer periodischen Analyse (M22) der Signale, die über die Vorderseite jedes Empfangsmoduls ($2_i$) quer über die Piste empfangen werden, und auf einer periodischen Messung (M23) der Änderung des Radarquerschnitts des sich auf der Piste bewegenden Ziels (AR) in der Nähe der bistatischen Achsen von drei Paaren ($1_{i-1}$-$2_{i+1}$, $1_i$-$2_i$, $1_{i+1}$-$2_{i+1}$) in einer Masche ($M_i$), welche sich im Wesentlichen im Mittelpunkt der Masche kreuzen, basiert.

6. Verfahren nach einem der Ansprüche 1 bis 5, welches eine Flugbahnverfolgung (M1) eines Luftziels (A) in der Umgebung der Piste umfasst, die auf einer periodischen Ortung des Luftziels durch multistatische Interferometrie (M11) der durch die Empfangsmodule empfangenen Signale in einem Raum mit drei Dimensionen basiert, die den Positionskoordinaten des Ziels unter Vernachlässigung des Dopplereffekts entsprechen, und auf einer Kombination (M12) einer Verarbeitung einer multistatischen Matrix der empfangenen Signale und der Diversity des Dopplereffekts.

7. Verfahren nach einem der Ansprüche 1 bis 6, wobei die gesendeten orthogonalen Signale unterschiedliche Frequenzen aufweisen.

8. System zum Überwachen von Zielen auf einer Piste (P) mithilfe von Sendemodulen, die geeignet sind, Signale zu senden, und von Empfangsmodulen, die geeignet sind, Signale mit Polarisations-Diversity zu empfangen, wobei die Sende- und Empfangsmodule um die Piste (P) herum verteilt sind, sowie eines Mittels zum Detektieren eines Objekts auf der Piste, **dadurch gekennzeichnet, dass** die Sendemodule ($1_1$ - $1_I$) und die Empfangsmodule ($2_1$ - $2_I$) abwechselnd entlang jeder der Längsseiten der Piste (P) verteilt sind, wobei die Sendemodule dafür eingerichtet sind, orthogonale Signale zu senden, und zwar mindestens zwei orthogonale Signale pro Sendemodul, und dadurch, dass das System umfasst: ein Mittel (331, 35, 26) für einen kohärenten Empfang von Signalen in den Empfangsmodulen beim Senden von Signalen durch die Sendemodule, und das Mittel (363) zum Detektieren eines Objekts (OB) auf der Piste, dessen Detektion auf einer Verteilung der Module in Maschen ($M_i$), welche jeweils drei benach-barte Paare von einem Sendemodul und einem Empfangsmodul ($1_{i-1}$-$2_{i-1}$, $1_i$-$2_i$, $1_{i+1}$-$2_{i+1}$) aufweisen, und auf einer Funkortung des Objekts durch Triangulation und Interferometrie in mindestens einer Masche basiert.

9. System nach Anspruch 8, welches ein Mittel (362) zum Analysieren eines Ziels (AR), das sich auf der Piste bewegen kann, umfasst, basierend auf der Verteilung der Module in den Maschen ($M_i$), auf einer periodischen Analyse von Signalen, die geeignet sind, über die Vorderseite durch jedes Empfangsmodul ($2_i$) quer über die Piste empfangen zu werden, und auf einer periodischen Messung (M23) der Änderung des Radarquerschnitts des Ziels (AR), das sich auf der Piste bewegen kann, in der Nähe der bistatischen Achsen von drei Paaren ($1_{i-1}$-$2_{i+1}$, $1_i$-$2_i$, $1_{i+1}$-$2_{i+1}$) in einer Masche ($M_i$), welche sich im Wesentlichen im Mittelpunkt der Masche kreuzen.

10. System nach Anspruch 8 oder 9, welches ein Mittel (361) zum Verfolgen der Flugbahn eines Luftziels (A) in der Umgebung der Piste umfasst, basierend auf einer periodischen Ortung des Luftziels durch multistatische Interferometrie (M11) der Signale, die geeignet sind, durch die Empfangsmodule empfangen zu werden, in einem Raum mit drei Dimensionen, die den Positionskoordinaten des Ziels unter Vernachlässigung des Dopplereffekts entsprechen, und auf einer Kombination (M12) einer Verarbeitung einer multistatischen Matrix der Signale, die geeignet sind, empfangen zu werden, und der Diversity des Dopplereffekts.

**11.** System nach Anspruch 8, welches ein zentralisiertes Mittel (3) zum Übertragen der zu sendenden Signale über Lichtwellenleiter (FO) zu den Sendemodulen ($1_1$-$1_l$) und zum Empfangen der Signale, die geeignet sind, durch die Empfangsmodule ($2_1$ - $2_l$) empfangen zu werden, über Lichtwellenleiter (FO) umfasst.

**12.** Computerprogramm, das geeignet ist, in einem System zum Überwachen von Zielen auf einer Piste (P) mithilfe von Sendemodulen und von Empfangsmodulen eingesetzt zu werden, **dadurch gekennzeichnet, dass** es Anweisungen umfasst, welche, wenn das Programm in dem System ausgeführt wird, Folgendes steuern: einen kohärenten Empfang von Signalen, die durch die Empfangsmodule empfangen werden, mit einem Senden von orthogonalen Signalen, die durch die Sendemodule gesendet werden, und zwar von mindestens zwei orthogonalen Signalen pro Sendemodul, wobei die Sendemodule ($1_1$ - $1_l$) und die Empfangsmodule ($2_1$ - $2_l$) abwechselnd entlang jeder der Längsseiten der Piste (P) verteilt sind, und eine Detektion (M3) eines Objekts (OB) auf der Piste, die auf einer Verteilung (M31) der Module in Maschen ($M_i$), welche jeweils drei benachbarte Paare von einem Sendemodul und einem Empfangsmodul ($1_{i-1}$-$2_{i-1}$, $1_i$-$2_i$, $1_{i+1}$-$2_{i+1}$) aufweisen, und auf einer Funkortung (M36) des Objekts durch Triangulation und Interferometrie in mindestens einer Masche basiert.

**Claims**

**1.** A method for monitoring targets on a runway (P) by means of emitting modules able to emit signals and of receiving modules able to receive signals with a polarization diversity, the emitting modules and the receiving modules being distributed around the runway (P), the emitting modules ($1_1$ - $1_l$) and the receiving modules ($2_1$ - $2_l$) being alternately distributed along each one of longitudinal sides of the runway (P), and **characterized in that** the method includes emitting orthogonal signals by the emitting modules at a rate of at least two orthogonal signals per emitting module, a reception coherent with the emission of signals received by the receiving modules, and detecting (M3) an object (OB) on the runway based on a distribution (M31) of the modules into meshes ($M_i$) each including three neighbor pairs of emitting module and receiving module ($1_{i-1}2_{i-1}$, $1_i$-$2_i$, $1_{i+1}$-$2_{i+1}$) and on a radio location (M36) of the object through triangulation and interferometry in at least one mesh.

**2.** A method according to claim 1, including emitting signals in part at a first linear polarization and in part at a second linear polarization orthogonal to the first polarization from each emitting module, and detecting (M3) an object includes periodically for each bistatic pair of emitting module and receiving module in a mesh ($M_i$), a polarimetric analysis (M32) of components according to the first and second polarizations of the signals received by the receiving module of the pair and issued from the orthogonal signals at the first and second linear polarizations emitted by the emitting module of the mesh.

**3.** A method according to claim 1 or 2, according to which detecting (M3) an object includes periodically for each mesh ($M_i$), coherently subtracting (M33) a pre-stored free state of the runway from a current state of the runway derived from a processing of the signals received by the receiving modules of the mesh.

**4.** A method according to any one of claims 1 to 3, according to which detecting (M3) an object includes periodically for each mesh ($M_i$), determining (M34) a covariance matrix of an interferometric multistatic matrix of the signals received by the receiving modules ($1_i$-$2_{i-1}$, $1_i$-$2_i$, $1_{i+1}$-$2_{i+1}$) in the mesh ($M_i$) and building (M35) a matched filter depending on the covariance matrix for filtering the signals by the receiving modules in the mesh.

**5.** A method according to any one of claims 1 to 4, including analyzing (M2) a target (AR) moving on the runway, based on the distribution (M21) of the modules in the meshes ($M_i$), on a periodic analysis (M22) of the signals received by a front part of each receiving module ($2_i$) through the runway, and on a periodic measurement (M23) of the variation of the efficient radar cross section of the target (AR) moving on the runway in the vicinity of bistatic axes of three pairs ($1_{i-1}$-$2_{i+1}$, $1_i$-$2_i$, $1_{i-1}$-$2_{i+1}$) in a mesh ($M_i$) substantially concurrent at the centre of the mesh.

**6.** A method according to any one of claims 1 to 5, including monitoring (M1) a trajectography for an air target (A) in the surroundings of the runway based on a periodic location of the air target through a multistatic interferometry (M11) of the signals received by the receiving modules in a three dimension space corresponding to the coordinates of the position of the target by ignoring the Doppler effect, and through a combination (M12) of a processing of a multistatic matrix of the received signals and of the diversity of the Doppler effect.

7. A method according to any one of claims 1 to 6, according to which the emitted orthogonal signals have different frequencies.

8. A system for monitoring targets on a runway (P) by means of emitting modules able to emit signals and receiving modules able to receive signals with a polarization diversity, said emitting modules and said receiving modules being distributed around the runway (P), as well as means for detecting an object on the runway, **characterized in that** the emitting modules ($1_1$ - $1_I$) and the receiving modules ($2_1$ - $2_I$) are alternately distributed along each one of the longitudinal sides of the runway (P), the emitting modules being able to emit orthogonal signals at a rate of at least two orthogonal signals per emitting module, and **in that** the system includes means (331, 35, 26) for receiving signals in the receiving modules coherently with the emission of signals by the emitting modules, and said means (363) for detecting an object (OB) on the runway based on a distribution of the modules in meshes ($M_i$) each including three neighbor pairs of emitting module and receiving module ($1_{i-1}$-$2_{i-1}$, $1_i$-$2_i$, $1_{i+1}$-$2_{i+1}$) and on a radio location of the object through triangulation and interferometry in at least one mesh.

9. A system according to claim 8, including means (362) for analyzing a target (AR) able to move on the runway based on the distribution of the modules in the meshes ($M_i$), on a periodic analysis of the signals able to be received by a front part of each receiving module ($2_i$) through the runway, and on a periodic measurement (M23) of the variation of the efficient radar cross section of the target (AR) able to move on the runway in the vicinity of bistatic axes of three pairs ($1_{i-1}$-$2_{i-1}$, $1_i$-$2_i$, $1_{i+1}$-$2_{i+1}$) in a mesh ($M_i$) substantially concurrent at the centre of the mesh.

10. A system according to claim 8 or 9, including means (361) for monitoring a trajectography of an air target (A) in the surroundings of the runway based on a periodic location of the air target through a multistatic interferometry (M11) of the signals able to be received by the receiving modules in a three dimension space corresponding to the coordinates of the position of the target by ignoring the Doppler effect, and through a combination (M12) of a processing of a multistatic matrix of the received signals and of the diversity of the Doppler effect.

11. A system according to claim 8, including centralized means (3) for transmitting via optical fibers (FO) signals to be emitted by the emitting modules and for receiving via optical fibers (FO) signals to be received by the receiving modules ($2_1$ - $2_I$).

12. A computer program adapted to be implemented in a system for monitoring targets on a runway (P) by means of emitting modules and receiving modules, **characterized in that** it includes instructions which, when the program is executed in the system, carry out receiving signals received by the receiving modules coherently with an emission of orthogonal signals emitted by the emitting modules, at a rate of at least two orthogonal signals per emitting module, the emitting modules ($1_1$ - $1_I$) and the receiving modules ($2_1$ - $2_I$) being alternately distributed along each one of the longitudinal sides of the runway (P), and detecting (M3) an object (OB) on the runway based on a distribution (M31) of the modules into meshes ($M_i$) each including three neighbor pairs of emitting module and receiving module ($1_{i-1}$-$2_{i-1}$, $1_i$-$2_i$, $1_{i+1}$-$2_{i+1}$) and on a radio location (M36) of the object through triangulation and interferometry in at least one mesh.

## FIG. 1

## FIG. 3

fréquence

## FIG. 9

# FIG. 2

# FIG. 4

M1

361

PROCESSEUR DE TRAJECTOGRAPHIE

| Interférométrie sans effet Doppler | M11 |

| Matrice multistatique et diversité Doppler | M12 |

# FIG. 5

M2

362

ANALYSEUR DE ROULAGE

| Répartition des modules en maille | M21 |

| Analyse des signaux reçus par l'avant | M22 |

| Mesure de variation de SER | M23 |

# FIG. 6

M3

363

DETECTEUR D'OBJET

| Répartition des modules en maille | M31 |

| Analyse polarimétrique | M32 |

| Soustraction cohérente d'états | M33 |

| Matrice de covariance de matrice multistatique | M34 |

| Construction def filtre adapté | M35 |

| Localisation d'objet par triangulation | M36 |

## FIG. 7

$M_i$

$1_{i-1}$    $2_i$    $1_{i+1}$

P

X — — — X

$2_{i-1}$    $1_i$    $2_{i+1}$

2d

## FIG. 8

$1_{i-1}, 2_{i-1}$

MA

$1_{i-1}, 2_{i+1}$

$1_{i+1}, 2_{i-1}$

$1_i, 2_i$

$1_{i+1}, 2_{i+1}$

temps

$IT_{i-1,i}$    $IT_{i,i+1}$

**EP 2 406 660 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5268698 A
- EP 0744630 A
- EP 0550073 A
- WO 2006035199 A